(19) Europäisches Patentamt
European Patent Office
Office européen des brevets

(11) EP 4 428 300 A1

(12) **EUROPEAN PATENT APPLICATION**

(43) Date of publication:
**11.09.2024 Bulletin 2024/37**

(21) Application number: **23160807.6**

(22) Date of filing: **08.03.2023**

(51) International Patent Classification (IPC):
*D21H 19/02* (2006.01)      *D21F 5/00* (2006.01)
*D21H 19/40* (2006.01)      *D21H 19/44* (2006.01)
*D21H 19/82* (2006.01)      *D21H 19/84* (2006.01)
*D21H 25/04* (2006.01)      *D21H 27/10* (2006.01)

(52) Cooperative Patent Classification (CPC):
**D21H 27/10; B32B 27/10; B32B 27/32;
B32B 29/005; D21F 5/181; D21H 19/02;
D21H 19/40; D21H 19/44; D21H 19/822;
D21H 19/84; D21H 25/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SAPPI Netherlands BV
6211 AA Maastricht (NL)**

(72) Inventors:
• **SIMONS, Jo
3680 Maaseik (BE)**
• **RUHL, Rian
6288 CC Maastricht (NL)**
• **CELA, Tina
6049 HH Herten (NL)**

(74) Representative: **Schmitz, Joseph
Isler & Pedrazzini AG
Giesshübelstrasse 45
Postfach 1772
8027 Zürich (CH)**

(54) **BARRIER PAPERS**

(57)      A barrier paper, preferably for use in tropical conditions, comprising, in this order:
a paper-based substrate layer, comprising, in this order,
a base paper layer,
a first base paper overcoat layer comprising a polymer,
a second base paper overcoat layer comprising a polymer,
an inorganic layer,
optionally, a protective layer comprising a polymer,
characterized in that the paper-based substrate layer has a hygroexpansion of less than 0.5%, and preferably of 0.33% or less, and more preferably of 0.25% or less

EP 4 428 300 A1

**Description**

TECHNICAL FIELD

The present invention relates to barrier papers that are able to provide an excellent barrier against water vapor under tropical conditions and/or oxygen under ambient conditions.

PRIOR ART

In order to protect products against the effect of substances that can damage and/or spoil such products, products can be packaged in a packaging.

Thus, the packaging needs to be appropriately selected, depending on the packaged product, as well as depending on the substances that are to be kept from damaging the product.

When packaging goods that can spoil, such as foodstuffs, gases such as oxygen and water vapor should be kept from the foodstuffs, since on one hand, oxygen can lead oxidation of fats (rancidity) and one the other hand, humidity can lead to the growth of microorganisms. The problem is exacerbated when the ambient temperature is high, since higher temperature accelerates both oxidation as well as microorganism growth, which is why mostly the recommendation in packaged foodstuffs is to store them in a cool and dry place.

However, this is not always possible when foodstuffs are transported, exhibited or stored in tropical regions, i.e. in regions where high temperatures and humidity prevail in most seasons.

Historically, the packaging solutions that were available were in the form of polymer films that can be mass-produced, are robust as well as cost effective, and that can be heat-sealed using the proper equipment. For extra barrier against oxygen and moisture, such polymer films can be metallized with aluminum or other metals.

However, the polymer films have the problem of being sourced from non-renewable fossil raw materials, and of being virtually non-biodegradable, both of which are undesirable as a global effort to reduce the reliance on non-sustainable raw materials unfolds.

Paper packaging has been a traditional packaging solution for many decades, and lately, papers exhibiting good barrier properties against vapor and oxygen were developed as a replacement for metallized polymer films.

WO2022107007A1 provides a barrier film for a paper or paperboard-based packaging material, where the barrier film comprises a vacuum coating layer such as a metal layer and a protective coating layer comprising a cross-linked water-soluble polymer disposed on the vacuum coating layer. The vacuum layer, which in most cases is an aluminum layer, improves the barrier against oxygen and/or humidity. However, the oxygen and humidity barrier of the barrier papers that are reported are not on par at tropical conditions, unless the protective layer is foamed.

WO2021260043A1 discloses a process for improving the barrier properties of a barrier layer comprised in a pulp-based substrate layer having an inorganic barrier layer, where a layer of an aqueous barrier composition that is applied to the pulp-based substrate layer to form a pulp-based substrate layer is dried such that the moisture content of the pulp-based substrate layer having a barrier layer is below 2.5 % by weight, based on the weight of the pulp-based substrate layer having a barrier layer.

With the use of metals such as aluminum comes another problem when packaging foodstuffs. Aluminum is suspected of being harmful to human health, and thus regulations do not permit packaging solutions that leach non-negligible quantities of aluminum into the foodstuff when in direct contact with the packaging. Currently, the aluminum migration limit for paper-based packaging for direct contact with foodstuffs in Germany pursuant to BfR XXXVI. "Papiere, Kartons und Pappen für den Lebensmittelkontakt" should be less than 1 mg/l, measured according to EN 645:1994-01. However, metal layers are not the only source of aluminum in paper-based packaging solutions, since base papers, graphic layers or other types of layers can comprise aluminum-containing clays as pigments, fillers or rheology additives.

Thus, it is desirable to provide a packaging solution that is based at least in part on renewable raw materials, and which exhibits excellent barrier properties against oxygen at ambient and water vapour at tropical conditions, while at the same time exhibiting a low migration of aluminium into foodstuffs that are in contact with the packaging solution.

SUMMARY OF THE INVENTION

The present invention provides a paper-based packaging solution that comprises renewably sourced raw materials, and which exhibits excellent barrier properties against oxygen at ambient and water vapor at tropical conditions while at the same time exhibiting a low migration of aluminum into foodstuffs that are in contact with the packaging solution.

In particular, the barrier paper of the present invention exhibits a water vapor transmission rate (WVTR) of 1 g/m$^2$*day or less at tropical conditions (38°C/90%RH), and/or an oxygen transmission rate (OTR) of 1 g/m$^2$*day or less at ambient conditions (23°C/50RH).

Further, the barrier paper of the present invention exhibits an aluminum migration of 1 mg/l or less, when measured according to EN 645:1994-01.

It is a first object of the present invention to provide a barrier paper, preferably for use in tropical conditions (38°C/90%RH), comprising, in this order, a paper-based substrate layer, comprising, in this order, a base paper layer, a first base paper overcoat layer comprising a polymer, a second base paper overcoat layer comprising a polymer; an inorganic layer, optionally, a protective layer comprising a polymer, characterized in that the paper-based substrate layer has a hygroexpansion of less than 0.5%, and preferably of 0.33 % or less, and more preferably of 0.25% or less.

Without wishing to be held to a particular theory, it is believed that when the paper-based substrate layer has a hygroexpansion of less than 0.5%, and preferably of 0.33 % or less, and more preferably of 0.25% or less, the aluminum release of the barrier paper is reduced compared to other barrier papers that do not exhibit a paper-based substrate layer has a hygroexpansion of less than 0.5%, because the layers within the barrier paper that comprise a source of aluminum do not experience a change in shape.

It is a second object of the present invention to provide a food packaging material comprising the barrier paper according to the first object, where the food packaging material is configured such that the barrier paper is in direct contact with a food when in use.

It is a third object of the present invention to provide a use of a barrier paper according to the first object, in a manufacturing process of a food packaging material according to the second object, or in a food packaging material according to the second object of the invention.

It is a fourth object of the present invention to provide a process to produce a barrier paper, preferably a barrier paper according to the first object of the present invention, the barrier paper comprising a paper-based substrate layer comprising, in this order, a base paper layer, a first base paper overcoat layer comprising a polymer, a second base paper overcoat layer comprising a polymer, an inorganic layer,

optionally, a protective layer comprising a polymer, wherein the process includes the steps of, in the drying section of a paper or paperboard machine equipped with a drying device, drying a dewatered base paper layer precursor, using the drying device, to form a dried paper base layer, characterized in that the drying device is configured to prevent drying shrinkage. Alternatively, instead of drying a dewatered base paper layer precursor, the process may include the step of drying a dewatered base paper layer precursor coated with a coating composition for the first base paper overcoat layer comprising a polymer, using the drying device, to form a dried base paper layer coated with the first base paper overcoat layer comprising a polymer. When the drying device is configured to prevent drying shrinkage, the paper-based substrate layer within the barrier paper will exhibit a hygroexpansion of less than 0.5%, and preferably of 0.33% or less, and more preferably of 0.25% or less.

Further embodiments of the invention are laid down in the dependent claims.

DESCRIPTION OF PREFERRED EMBODIMENTS

It is a first object of the present invention to provide a barrier paper, preferably for use in tropical conditions, i.e. at 38°C and 90 % relative humidity (RH), comprising, in this order, a paper-based substrate layer, comprising, in this order, a base paper layer, a first base paper overcoat layer comprising a polymer, a second base paper overcoat layer comprising a polymer; an inorganic layer, optionally, a protective layer comprising a polymer, characterized in that the paper-based substrate layer has a hygroexpansion of less than 0.5%, and preferably of 0.33% or less and more preferably of 0.25% or less.

A barrier paper is a paper that exhibits a barrier property against one or more substances.

The barrier paper according to the first object of the present invention exhibits a barrier property against at least water vapor, oxygen, or both. In some embodiments, the barrier paper may additionally exhibit a barrier property against other substances, such as for example, oil, fat, grease, air, liquid water and so on.

In one preferred embodiment of the first object of the present invention, at least one chosen from the base paper layer, the first or second base paper overcoat, and the inorganic layer comprises aluminum (Al). Aluminum may be present as metallic aluminum ($Al^0$) in the inorganic layer, for example, when the inorganic layer is a layer of aluminum applied by physical or chemical vapor deposition, or may be present as an oxide of aluminum ($AlO_x$). In the first or second base paper overcoat, as well as in the base paper layer, aluminum is comprised in form of a mineral particles, formed of minerals that comprise aluminum. For example, minerals that comprises aluminum are aluminum phyllosilicate clays, such as kaolin clay.

In one preferred embodiment of the first object of the present invention the barrier paper exhibits a water vapor transmission rate (WVTR) of less than 1 g/m$^2$*day or less when measured at 38°C and 90% relative humidity according to ISO 2528.

In one preferred embodiment of the first object of the present invention the barrier paper exhibits a an oxygen transmission rate (OTR) of 1 cm$^3$/m$^2$*day or less when measured at 23°C and 50% relative humidity according to ISO 2528.

In one preferred embodiment of the first object of the present invention the barrier paper exhibits a water vapor transmission rate (WVTR), of less than 1 g/m$^2$*day or less, when measured at 38°C and 90% relative humidity according to ISO 2528, and an oxygen transmission rate (OTR) of 1 $cm^3/m^2$*day or less, when measured at 23°C and 50% relative humidity according to ISO 2528.

The barrier paper according to the first object of the present invention comprises, in this order, a paper-based substrate layer, comprising, in this order, a base paper layer, a first base paper overcoat layer comprising a polymer, a second base paper overcoat layer comprising a polymer; an inorganic layer, and optionally, a protective layer comprising a polymer.

The order of a paper-based substrate layer, inorganic layer, and optionally, a protective layer is chosen such that the paper-based substrate layer forms a substrate layer which is configured, at least on one side, for receiving the inorganic layer and provides protection for one side of the inorganic layer and the protective layer, when present, provides protection for the other side of the inorganic layer. Thus, when the protective layer is present, the inorganic layer sandwiched between the paper-based substrate layer and the protective layer. Thus, in the barrier paper according to the first object of the present invention, the inorganic layer is not exposed to, but shielded from, damage like scuffs or scratches.

Within the barrier paper according to the first object of the present invention, the paper-based substrate layer forms a substrate layer which is configured, at least on one side, for receiving the inorganic layer, which is deposited on the side of the substrate layer configured to receive the inorganic layer, by thin film deposition such as for example atomic layer deposition (ALD) or chemical vapor deposition (CVD).

Within the barrier paper according to the first object of the present invention, the paper-based substrate layer, comprises, or consists of, in this order, a base paper layer, a first base paper overcoat layer comprising a polymer, and a second base paper overcoat layer comprising a polymer.

The base paper layer may be a paper or paper-board layer, which may be formed from a mixture of paper pulp and mineral particles such as fillers, pigments or sizing materials.

Suitable paper pulp may be sourced from either virgin or recycled pulp sources. An example of a recycled pulp source is deinked pulp. Virgin pulp sources are plant materials such as wood, rice straw, bagasse, bamboo, sisal, and others. In a preferred embodiment, the paper pulp forming the base paper layer is chemical wood pulp such as Kraft or sulfite wood pulp, and is more preferably a bleached chemical wood pulp. Suitable bleached chemical wood pulps are northern bleached softwood kraft (NBSK), southern bleached softwood kraft (SBSK) or dissolving pulp. The mineral particles in the base paper layer are formed of minerals chosen from calcium carbonate, talcum, gypsum or titanium dioxide, aluminum phyllosilicate clays such as kaolin clay.

Within the barrier paper according to the first object of the present invention, in the paper-based substrate layer, the base paper layer may be a calendared or super-calendared paper or paperboard. Calendaring and super-calendaring can densify the base paper layer, and provide a smoother surface on the base paper layer, which is advantageous when applying liquid coating compositions onto the base paper layer.

The applicants have found that when the base paper layer of the barrier paper according to the first object of the present invention is obtained via a papermaking or paperboardmaking process in which, in the drying section of the paper or paperboard machine, the drying shrinkage of the base paper layer is prevented, at least in one direction chosen from machine (MD) or cross direction (CD), and preferably in cross direction (CD), a unique combination of excellent water vapour transmission rate (WVTR), oxygen transmission rate (OTR), and aluminium migration can be obtained in the barrier paper according to the first object of the present invention. Thus, in a preferred embodiment of the barrier paper according to the first object of the present invention, the base paper layer of the barrier paper is obtained via a papermaking or paperboardmaking process in which, in the drying section of the paper machine or paperboard machine, the drying shrinkage of the paper or paperboard is prevented. Stated alternatively, in the barrier paper according to the first object of the present invention, the base paper layer of the barrier paper is obtained from a paper machine or paperboard machine having a drying section equipped with a device configured to prevent drying shrinkage, at least in one direction chosen from machine (MD) or cross direction (CD), and preferably in cross direction (CD).

When the base paper layer of the barrier paper according to the first object of the present invention is obtained via a papermaking or paperboardmaking process in which, in the drying section of the paper or paperboard machine, the drying shrinkage of the base paper layer is prevented, the hygroexpansion of the base paper layer is reduced.

It will be apparent to the person skilled in the art of papermaking or paperboardmaking processes that multiple technical solutions may be levied in order to prevent the drying shrinkage of the base paper layer in the drying section of the paper machine. An exemplary solution is the use of Yankee dryers in the drying section of the paper machine or paperboarding machine, because Yankee dryers restrain the paper or paperboard during drying so that drying shrinkage is countered. Thus, in a preferred embodiment of the barrier paper according to the first object of the present invention, the base paper layer of the barrier paper is obtained from a paper machine or paperboard machine having a drying section equipped with Yankee dryers.

It will be understood that the above reasoning may be applied not only to the bare base paper layer, but also to the base paper layer when it is combined with the first base paper overcoat layer, and to the paper-based substrate layer, since depending on the paper machine or paperboard machine and the papermaking or paperboardmaking process, the paper base layer might be subjected to the drying before the formation of the first base paper overcoat layer, after the formation of the first base paper overcoat layer but before the formation of the second base paper overcoat layer, or even after the formation of both the first and second base paper overcoat layer. The important consideration is that the base paper layer (or the coated base paper layer) is dried in a manner that drying shrinkage is prevented so that the paper-based substrate layer has a hygroexpansion of less than 0.5%, and preferably of 0.33% or less, and more preferably of 0.25% or less.

Within the barrier paper according to the first object of the present invention, in the paper-based substrate layer, the first base paper overcoat layer comprising a polymer is preferably in direct contact with at least one side of the base paper layer. The first base paper overcoat layer comprises a polymer, which may be a water-soluble polymer or a non water-soluble polymer, and which may be comprised in the first base paper overcoat layer in an amount of 0.5 to 20 g/m$^2$, preferably in an amount of 2 to 8 g/m$^2$, more preferably in a an amount of 3 to 6 g/m$^2$.

A purpose of the first base paper overcoat layer is to decrease the porosity of the surface of the base paper layer.

For example, the first base paper overcoat layer may comprise a water-soluble polymer which may be a biopolymer, such as starch, and which may be comprised in the first base paper overcoat layer in an amount of about 0.5 to about 20 g/m$^2$, preferably in an amount of 2 to 8 g/m$^2$, more preferably in a an amount of 3 to 6 g/m$^2$.

For example, the first base paper overcoat layer may comprise a non water-soluble polymer may be styrene-butadiene copolymer or styrene-acrylic copolymer, which may be comprised in the first base paper overcoat layer in an amount of about 0.5 to about 20 g/m$^2$, preferably in an amount of 2 to 8 g/m$^2$, more preferably in a an amount of 3 to 6 g/m$^2$. In a preferred embodiment, the styrene-butadiene copolymer or styrene-acrylic copolymer is an emulsion polymer.

In a preferred embodiment of the barrier paper according to the first object of the present invention, the first base paper overcoat layer comprises microfibrillated cellulose, either as the sole polymer of the first base paper overcoat layer, or in combination with another polymer of the first base paper overcoat layer, and may be comprised in the first base paper overcoat layer in an amount of about 0.5 to about 20 g/m$^2$, preferably in an amount of 2 to 8 g/m$^2$, more preferably in a an amount of 3 to 6 g/m$^2$.

It is noted that when the first base paper overcoat layer comprises more than one polymer, such as for example microfibrillated cellulose in combination with another polymer of the base paper overcoat layer, the total amount of polymer comprised in the first base paper overcoat layer is of about 0.5 to 20 g/m$^2$, preferably in an amount of 2 to 8 g/m$^2$, more preferably in a an amount of 3 to 6 g/m$^2$.

For example, the first base paper overcoat layer may comprise microfibrillated cellulose in combination with a further biopolymer as the polymer of the base paper overcoat layer, which further biopolymer may be a protein or a polysaccharide.

In a preferred embodiment of the barrier paper according to the first object of the present invention, the first base paper overcoat layer comprises ethylene vinyl alcohol copolymer (EVOH) as the polymer, which may be a water-soluble type of ethylene vinyl alcohol copolymer (EVOH).

In a preferred embodiment of the barrier paper according to the first object of the present invention, the first base paper overcoat layer comprises ethylene vinyl alcohol copolymer (EVOH), which may having a an ethylene content from about 20 to about 55 mole % or which may have an ethylene content of less than 20 mole%. In the latter case, the ethylene vinyl alcohol copolymer is preferably a water-soluble ethylene vinyl alcohol copolymer.

In general, the first base paper overcoat layer is formed by applying a liquid coating composition comprising the polymer of the first base paper overcoat layer on top of the base paper layer. Depending on the polymer used, the liquid coating composition may be a solution, a latex or a dispersion, or a mixture comprising two or more thereof.

In general, when a water-soluble polymer is used as the polymer, the first base paper overcoat layer is formed by applying an aqueous solution of the polymer on one side of the base paper layer via a suitable process such as for example spray coating, curtain coating, roller coating or blade coating, and drying the aqueous solution of the polymer.

In general, when microfibrillated cellulose is used as the polymer, the first base paper overcoat layer is formed by applying an aqueous dispersion of the polymer on one side of the base paper layer via a suitable process such as for example spray coating, curtain coating, roller coating or blade coating, and drying the aqueous solution of the polymer.

In general, when a non water-soluble polymer such as styrene-butadiene is used as the polymer, the first base paper overcoat layer is formed by applying an aqueous latex of the polymer on one side of the base paper layer via a suitable process such as for example spray coating, curtain coating, roller coating or blade coating, and drying the aqueous latex to form the first base paper overcoat layer.

In one embodiment, the first base paper overcoat layer further comprises mineral particles, wherein the mineral comprises aluminium (Al). An example of such a mineral are clay minerals that comprise aluminium (Al), which aluminium may be in the form of an oxide of aluminum, such as for example alumina ($Al_2O_3$). Such a clay is for example kaolin, which is a widely used clay in papermaking and paperboard making.

For example, the first base paper overcoat layer may comprise styrene-butadiene copolymer or styrene-acrylic copolymer, or a mixture thereof as the polymer of the first base paper overcoat layer, which may be comprised in the first base paper overcoat layer in an amount of about 0.5 to about 20 g/m$^2$, preferably in an amount of 2 to 8 g/m$^2$, more

preferably in a an amount of 3 to 6 g/m$^2$, together with a clay mineral that comprises aluminium (Al), such as kaolin.

Within the barrier paper according to the first object of the present invention, in the paper-based substrate layer, the second base paper overcoat layer comprising a polymer is preferably in direct contact with one side of the first base paper overcoat layer. The second base paper overcoat layer comprises a polymer, which may be a water-soluble polymer or a non water-soluble polymer, and which may be comprised in the second base paper overcoat layer in an amount of 0.5 to 20 g/m$^2$, preferably in an amount of 2 to 8 g/m$^2$, more preferably in a an amount of 3 to 6 g/m$^2$.

In one example, the polymer may be a biodegradable polymer, such as polyhydroxyalkanoate, and may be comprised in the second base paper overcoat layer in an amount of 0.5 to 20 g/m$^2$, preferably in an amount of 2 to 8 g/m$^2$, more preferably in a an amount of 3 to 6 g/m$^2$.

A purpose of the second base paper overcoat layer is to decrease the number of, and preferably eliminate any, pinholes of the surface of the base paper layer for an efficient subsequent application of the inorganic layer free of defects. Thus, in a preferred embodiment of the present invention, the paper-based substrate layer is pinhole free, or has less than 5 pinholes per m$^2$.

It has been found that the smoothness of the second base paper overcoat layer can be improved when the total amount of polymer comprised in the second base paper overcoat layer is applied in a coating process that consists of two or three coating steps, each applying a fraction of the total amount polymer comprised in the second base paper overcoat layer instead of applying the total amount polymer comprised in the second base paper overcoat in a single coating step. For instance, half of the total amount of polymer may be applied in a first coating step and the remaining half of the total amount of polymer may be applied in a second coating step. Suitable coating techniques that may be used for the application of the coating composition that results in the second base paper overcoat layer are for example spray coating, curtain coating, roller coating or blade coating. In a preferred embodiment, the coating composition is an aqueous coating composition such as for example a solution of the polymer or a latex of the polymer. It is understood that in each coating step, the coating composition is dried after being applied, i.e. when multiple coating steps are carried out, the coating composition is dried between coating steps and after the last coating step. Alternatively, it is possible to coat wet-on-wet when using curtain coating in conjunction with a dual layer slot die.

In one embodiment of the barrier paper according to the first object of the present invention, a suitable polymer comprised in the second base paper overcoat layer may be a polymer or copolymer of vinyl alcohol, such as polyvinyl alcohol or ethylene vinyl alcohol (EVOH) copolymer, or mixtures of a polymer or copolymer of vinyl alcohol such as polyvinyl alcohol or ethylene vinyl alcohol (EVOH) copolymer, with other polymers such as proteins or polysaccharides. Alternatively, the polymer comprised in the second base paper overcoat layer may be proteins or polysaccharides only, i.e. without polymer or copolymer of vinyl alcohol, the proteins or polysaccharides being the sole polymer of the second base paper overcoat layer.

For example, mixtures of polymer or copolymer of vinyl alcohol, such as polyvinyl alcohol or ethylene vinyl alcohol (EVOH) copolymer and proteins such as casein, legume protein, or whey protein can be used as polymer in the second base paper overcoat layer.

For example, mixtures of polymer or copolymer of vinyl alcohol, such as polyvinyl alcohol or ethylene vinyl alcohol (EVOH) copolymer and polysaccharides such as nanocellulose, starch, pectin, guar gum, alginate, or chitosan can be used as polymer in the second base paper overcoat layer.

For example, mixtures of polyvinyl alcohol (PVOH), nanocellulose and a starch such as potato starch can be used as polymer in the second base paper overcoat layer.

When the second base paper overcoat layer comprises a mixture of an ethylene vinyl alcohol (EVOH) copolymer with either a protein, a polysaccharide, or both, as the polymers comprised the second base paper overcoat layer, the total amount of polymers in the second base paper overcoat layer may be of 0.5 to 20 g/m$^2$, preferably in an amount of 2 to 8 g/m$^2$, more preferably in a an amount of 3 to 6 g/m$^2$. In a preferred embodiment, the protein and/or polysaccharide provide for 50 % to 90 % by weight, preferably for 70 % to 90 % by weight of the total amount of ethylene vinyl alcohol (EVOH) copolymer and proteins and/or polysaccharides, and/or the ethylene vinyl alcohol (EVOH) copolymer provides for 10 % to 50 % by weight, preferably for 10 % to 30 % by weight, of the total amount of ethylene vinyl alcohol (EVOH) copolymer and proteins and/or polysaccharides. In this case, an ethylene vinyl alcohol copolymer (EVOH) that is water-soluble or has an ethylene content from about 20 to about 55 mole % is preferred. In a preferred embodiment of the barrier paper according to the first object, the polymer in the second base paper overcoat layer is a mixture of ethylene vinyl alcohol (EVOH) copolymer and polysaccharides such as nanocellulose , starch, pectin, guar gum, alginate, or chitosan can be used as polymer in the second base paper overcoat layer.

For example, a suitable water-soluble polymer may be a water-soluble type of ethylene vinyl alcohol (EVOH) copolymer. A non water-soluble polymer may be styrene-butadiene copolymer or styrene-acrylic copolymer, or a polyhydroxyalkanoate.

In a preferred embodiment, the second base paper overcoat layer comprises ethylene vinyl alcohol copolymer (EVOH) as the sole polymer of the second base paper overcoat layer, which may be a water-soluble type of ethylene vinyl alcohol copolymer (EVOH).

In a preferred embodiment, the second base paper overcoat layer comprises ethylene vinyl alcohol copolymer (EVOH) as polymer, which may be a water-soluble type of ethylene vinyl alcohol copolymer (EVOH) in combination with a polyhydroxyalkanoate. The polyhydroxyalkanoate is not water-soluble, and thus, the coating composition for such as second base paper overcoat layer is provided as dispersion of polyhydroxyalkanoate in an aqueous solution of ethylene vinyl alcohol copolymer (EVOH). The water-soluble type of ethylene vinyl alcohol copolymer (EVOH) may preferably have an ethylene content of less than 20 mole%.

In a preferred embodiment, the second base paper overcoat layer comprises acrylate copolymer or a polyurethane as the polymer.

In a preferred embodiment, the second base paper overcoat layer comprises ethylene vinyl alcohol copolymer (EVOH) having an ethylene content from about 20 to about 55 mole % or having an ethylene content of less than 20 mole%.

In one embodiment, the second base paper overcoat layer further comprises mineral particles, wherein the mineral comprises aluminum or aluminium oxide. An example of such a mineral are clay minerals that comprise aluminium such as kaolin.

In one embodiment, the second base paper overcoat layer further comprises a fatty acid. The fatty acid may be, for example, long-chain fatty acids (LCFA) with aliphatic tails of 13 to 21 carbons, which may be saturated or unsaturated, such as stearic acid, palmitic acid or mixtures of both.

In a preferred embodiment, both the first base paper overcoat layer and the second base paper overcoat layer comprise ethylene vinyl alcohol copolymer (EVOH) as a polymer, preferably as the sole polymer, which may be a water-soluble type of ethylene vinyl alcohol copolymer (EVOH).

In a preferred embodiment, both the first base paper overcoat layer and the second base paper overcoat layer comprise ethylene vinyl alcohol copolymer (EVOH) having an ethylene content from about 20 to about 55 mole % as a polymer, or having an ethylene content of less than 20 mole%, preferably as the sole polymer.

In a preferred embodiment, both the first base paper overcoat layer and the second base paper overcoat layer comprise the same polymer as sole polymer, or the same combination of polymers. In that case, the amount of the polymer or polymers in both the first base paper overcoat layer and the second base paper overcoat layer is preferably the same.

The barrier paper according to the first object of the present invention comprises an inorganic layer. The inorganic layer may be formed of a metal layer that comprises, or consists of, a metal or a metal oxide. Alternatively, the inorganic layer may be formed of a non-metal layer that comprises, or consists of, a non-metal such as for example silicon or silicon dioxide; or a nitride such as silicon nitride.

In a preferred embodiment of the barrier paper according to the first object, the inorganic layer has a thickness of less than 500 nm, preferably of from 5 to 250 nm, more preferably of from 110 to 250 nm. The thickness of the inorganic layer is inferior to traditional metal layers used in paper-based barrier laminates, which include a metal foil having a thickness in excess of 5 microns or more. The inorganic layer of the barrier paper according to the first object is not a foil, but corresponds rather to a thin film layer due to its inferior thickness. Accordingly, methods of thin film deposition such as for example sputtering, atomic layer deposition (ALD) or vacuum deposition methods such as physical or chemical vapor deposition (PVD/CVD), in particular e-beam evaporation PVD, may be used to form the inorganic layer on the second base paper overcoat layer of the paper-based substrate layer of the barrier paper according to the first object.

In a preferred embodiment of the barrier paper according to the first object, the inorganic layer consists of a metal, such as aluminum, or a metal oxide, such as aluminum oxide, or silicon, or silicon dioxide. More preferably, the inorganic layer consists of a metal layer, wherein the metal is aluminum.

The barrier paper according to the first object of the present invention may comprise a protective layer comprising a polymer, such as for example a polyolefin. The protective layer comprising a polymer protects the inorganic layer against damage such as scuffing, scratching and such. In addition, the protective layer may also provide further barrier functionality and heat-sealing functionality. Alternatively, the protective layer may comprise a mixture of a polysaccharide and /or a protein as the polymer, and may further comprise a fatty acid such as for example oleic or stearic acid.

In a preferred embodiment of the barrier paper according to the first object, the protective layer is an emulsion polymer, and further the protective layer is preferably not a foam.

In a preferred embodiment of the barrier paper according to the first object, the protective layer is a thermoplastic polymer, preferably a non-cross-linked, thermoplastic polymer, such as a polyolefin, which may be heat-sealable. Preferably, the polyolefin is chosen from polyethylene, polypropylene, ethylene vinyl acetate or ethylene acrylic acid copolymer.

The protective layer may be formed by applying an aqueous latex of the polymer on one side of the base paper layer via a suitable process such as for example spray coating, curtain coating, roller coating or blade coating, and drying the aqueous latex to form the protective layer.

It is a second object of the present invention to provide a food packaging material comprising the barrier paper according to the first object, where the food packaging material is preferably configured such that the barrier paper is in direct contact with a food when in use.

The food packaging material according to the second object of the present invention may have any form that is suitable for packaging foods. For example, the packaging material may be in the form of a food container that is preformed, such as a tray, a cup, a bottle, a box, a dish, a capsule, a sachet, a bag, a pouch, or a holding cone. Alternatively the packaging material may be in the form of a sheet that can be a packaging sheet, a wrapping sheet, a separating sheet and so on. Alternatively, the barrier paper may be comprised in a food packaging material as a part of a food container, where the food packaging material is in the form of a cap or a lid of the food container, especially a peelable lid.

It is a third object of the present invention to provide a use of a barrier paper according to the first object, in a manufacturing process of a food packaging material according to the second object or in a food packaging material according to the second object.

The barrier paper according to the first object can be used in any manufacturing process of a food packaging material. In particular, when manufacturing process comprises a step of applying a graphic layer to the food packaging material, the barrier paper according to the first object comprises a graphic layer that is adjacent to the paper-based substrate layer, on the side opposite of the layers having a barrier functionality, e.g. of the inorganic layer,. In a preferred embodiment of the barrier paper according to the first object, the paper-based substrate layer and the inorganic layer are adjacent to each other and/or the inorganic layer and the protective layer are adjacent to each other, i.e. they are in contact with each other with no other layer disposed in between. In the process to produce a barrier paper according to the present invention, this may be achieved by directly depositing the constituent layers in the desired sequence onto each other.

It is a fourth object of the present invention to provide a process to produce a barrier paper, preferably a barrier paper according to the first object of the present invention, comprising a paper-based substrate layer, comprising, in this order, a paper-based substrate layer, comprising, in this order, a base paper layer, a first base paper overcoat layer comprising a polymer, a second base paper overcoat layer comprising a polymer; an inorganic layer; optionally, a protective layer comprising a polymer;

wherein the process includes the steps of, in the drying section of a paper or paperboard machine equipped with a drying device: drying a dewatered paper base layer precursor, using the drying device, to form the paper base layer, characterized in that the drying device is configured to prevent drying shrinkage. Alternatively, instead of drying a dewatered base paper layer precursor, the process may include the step of drying a dewatered base paper layer precursor coated with a coating composition for the first base paper overcoat layer comprising a polymer, using the drying device, to form the base paper layer coated and the first base paper overcoat layer comprising a polymer. When the drying device is configured to prevent drying shrinkage, the paper-based substrate layer within the barrier paper will exhibit a hygroexpansion of less than 0.5%, and preferably of 0.33% or less, and more preferably of 0.25% or less.

In the process to produce a barrier paper according to the fourth object of the present invention, the base paper layer, as well as the base paper layer with the first base paper overcoat layer and the paper-based substrate layer may be formed on a paper machine or a paperboard machine, whose design is well-known in the art.

A paper machine or a paperboard machine includes several sections, starting with a wet section, or wet end, where a web of wet paper precursor is formed by discharging a paper furnish onto a formation table, where the furnish is drained of some water mainly by suction. After the wet section, in the press section, the paper precursor is passed through dewatering devices which remove water via mechanical action, such as for example rolls that squeeze the paper precursor to dewater the paper precursor. At this point, the "dewatered" paper precursor, which is still moist, transits into the dryer section, where drying devices such as heated rolls, infrared heaters, and hot air heaters remove the remaining moisture from the dewatered paper precursor.

When dried in the dryer section, the dewatered paper precursor tends to shrink, in both machine direction as well as in cross direction, unless the drying shrinkage is prevented in some way.

In the process according to the fourth object of the present invention, in the drying section of the paper or paperboard machine equipped with a drying device, the dewatered paper base layer precursor is dried to form the paper base layer using said drying device, which drying device is configured to prevent drying shrinkage.

In a one embodiment of the process according to the fourth object of the present invention, the paper base layer thus obtained after drying may be subsequently coated with a liquid coating composition for the first base paper overcoat layer comprising a polymer. Depending on the polymer used, the liquid coating composition may be a solution, a latex or a dispersion, or a mixture comprising two or more thereof. Accordingly, the process according to this embodiment of the fourth object of the present invention includes the step of coating the paper base layer with a liquid coating composition for the first base paper overcoat layer comprising a polymer.

In another embodiment of the process according to the fourth object of the present invention, the paper base layer precursor may be coated with a liquid coating composition for the first base paper overcoat layer comprising a polymer, i.e. prior to drying the paper base layer precursor. Depending on the polymer used, the liquid coating composition may be a solution, a latex or a dispersion, or a mixture comprising two or more thereof. Accordingly, the process according to this embodiment of the fourth object of the present invention includes the step of coating the paper base layer precursor with a liquid coating composition for the first base paper overcoat layer comprising a polymer, in the wet section of the paper machine or the paperboard machine. It has been found that this embodiment is particularly preferred when the polymer is a polysaccharide, in particular when the polysaccharide is a microfibrillated cellulose. When the polysaccharide is microfibrillated cellulose, the liquid coating composition for the first base paper overcoat layer may comprise, or is, a dispersion of microfibrillated cellulose.

In a preferred embodiment of the process according to the fourth object of the present invention, the drying device configured to prevent drying shrinkage is a Yankee dryer.

EXAMPLES

Two of the test papers produced, one according to the present invention and one as a comparative will be described. Both papers comprised a base paper layer having a first base paper overcoat layer obtained by coating the base paper layer with coating composition of styrene acrylic latex and clay pigment (kaolin). Both papers comprised a second base paper overcoat layer obtained by coating the base paper layer with coating composition that comprised EVOH as the polymer. The thus formed EVOH second base paper overcoat layer had a weight of about 6 $g/m^2$. Both papers comprised an inorganic layer obtained by deposition of aluminium (Al) and a protective layer comprising a polyolefin as polymer was obtained by coating the inorganic layer with an aqueous polyolefin dispersion.

On both Paper 1 and Paper 2, the hygroexpansion was measured according to the below description, on the base paper layer having a first base paper overcoat layer. The results are shown in Table 1 ("hygroexpansion on base paper").

The hygroexpansion measurement for the substrate layer was carried out in quadruplicate, on four sample sheets having dimensions of DIN A4, i.e. of 210 mm x 297 mm.

Each sample sheet was conditioned in a climate chamber at 23 °C and 50 % RH for a day, after which temperature and humidity were increased to 38°C and 90% RH. The samples were then taken one by one from the climate chamber and their size was scanned at a resolution of 1200 dpi on a flatbed scanner. Images were saved as jpg files.

The distance between certain reference points in CD (cross direction) was measured threefold, using ImagePro (v10.3, Media Cybernetics, Inc.), for the samples when at 23°C and 50 % RH ($L_{0,CD}$) and when at 38°C and 90 % RH ($L_{CD}$). Measurements were performed in CD because hygroexpansion is dominant in this direction. From these data, the hygroexpansion value was calculated at 38°C and 90% RH by setting distance $L_{0,CD}$ in relation to the increased distance $L_{CD}$ as shown in the below Equation:

$$\text{hygroexpansion} = (L_{CD} - L_{0,CD})/ (L_{0,CD})$$

As can be seen in the below Table, Paper 1 barrier paper reaches exceptionally low WVTR and OTR values of 1 or below, and when the hygroexpansion value of the base paper used in the barrier paper is 0.25% at 38°C and 90 % RH, the measured value of Al migration drops significantly below the threshold of 1 mg/l when compared to Paper 2 using a base paper that has a hygroexpansion of 0.87%. Note that OTR and WVTR are either unaffected or even enhanced by the use of the base paper having a hygroexpansion value of less than 0.25%.

Al migration was determined as follows:
10.0 grams of the paper to be tested, cut into samples of between 1 and 2 $cm^2$ were submerged in 200 ml water and left to stand at 23°C for 24 hours. After that, the water was decanted and the remaining samples in the flask were washed with water twice, and the washing water collected and added to the decanted water. The concentration of aluminum in the decanted water was determined via ICP-OES.

Water vapor transmission rate (WVTR) was measured at 38°C and 90% relative humidity according to ISO 2528.

Oxygen transmission rate (OTR) was measured at 23°C and 50% relative humidity according to ISO 2528.

| Paper | Al migration on barrier paper [mg/l] | Hygroexpansion on base paper [%] | WVTR on barrier paper [g/m².day] | OTR on barrier paper [cc/m².day] |
|---|---|---|---|---|
| Paper 1 | 0,3 | 0.25 | 0.8 | <1 |
| Paper 2 | 23 | 0.87 | 5.4 | <1 |

**Claims**

1. A barrier paper, preferably for use in tropical conditions, comprising, in this order:

    a paper-based substrate layer, comprising, in this order,

        a base paper layer,
        a first base paper overcoat layer comprising a polymer,
        a second base paper overcoat layer comprising a polymer,

    an inorganic layer,
    optionally, a protective layer comprising a polymer,
    **characterized in that** the paper-based substrate layer has a hygroexpansion of less than 0.5%, and preferably of 0.33% or less, and more preferably of 0.25% or less.

2. The barrier paper according to claim 1, wherein at least one chosen from the base paper layer, the first or second base paper overcoat, and the inorganic layer comprises aluminum (Al) or an oxide of aluminum.

3. The barrier paper according to any preceding claim, wherein the polymer comprised in the first base paper overcoat layer is comprised in an amount of 0.5 to 20 $g/m^2$, preferably in an amount of 2 to 8 $g/m^2$, more preferably in an amount of 3 to 6 $g/m^2$ and/or wherein the polymer comprised in the second base paper overcoat layer is comprised in an amount of 0.5 to 20 $g/m^2$, preferably in an amount of 2 to 8 $g/m^2$, more preferably in an amount of 3 to 6 $g/m^2$.

4. The barrier paper according to any preceding claim, wherein the polymer comprised in the first base paper overcoat layer is styrene-butadiene or styrene-acrylic, and wherein the first base paper overcoat further comprises mineral particles, wherein the mineral comprises aluminium (Al).

5. The barrier paper according to any preceding claim, wherein the inorganic layer has a thickness of less than 500 nm, preferably of from 5 to 250 nm, and wherein the inorganic layer preferably consists of a metal or a metal oxide, in particular an oxide of aluminum, or a non-metal.

6. The barrier paper according to any preceding claim, wherein the polymer comprised in the second base paper overcoat layer is a polymer or copolymer of vinyl alcohol, such as polyvinyl alcohol or ethylene vinyl alcohol (EVOH) copolymer, as the sole polymer of the second base paper overcoat layer; a mixture of ethylene vinyl alcohol copolymer (EVOH) with a polysaccharide or a protein; or a protein and/or a polysaccharide as the sole polymer(s) of the second base paper overcoat layer.

7. The barrier paper according to any preceding claim, wherein the barrier paper further comprises a graphic layer that is adjacent to the paper-based substrate layer, on the side opposite of the inorganic layer, and wherein the graphic layer comprises a mineral particles and wherein the mineral comprise aluminium.

8. The barrier paper according to any preceding claim, wherein the second base paper overcoat layer is obtained by applying a same composition two or more times on the first base paper overcoat.

9. The barrier paper according to any preceding claim, wherein the protective layer is heat-sealable and wherein the polymer is a thermoplastic polymer such as a polyolefin, and the protective layer is obtained by applying an aqueous composition comprising a polyolefin, wherein the polyolefin is preferably chosen from polyethylene, polypropylene, ethylene vinyl acetate or ethylene acrylic acid copolymer.

10. The barrier paper according to any preceding claim, wherein the paper-based substrate layer and the inorganic layer are adjacent to each other and/or the inorganic layer and the protective layer are adjacent to each other.

11. The barrier paper according to any preceding claim, wherein the base paper layer comprises mineral particles, and wherein the mineral comprises aluminium and are preferably kaolin particles.

12. The barrier paper according to any preceding claim, wherein the barrier paper has a WVTR of less than 1 $g/m^2$*day at tropical condition when measured according to ISO 2528 at 38°C and 90% relative humidity and/or a OTR of less than 1 $cm^3/m^2$*day a when measured according to ISO 2528 at 38°C and 50% relative humidity and/or an aluminium migration of less than 1 mg/l when measured according to EN 645:1994-01.

13. A food packaging material comprising the barrier paper according to any one of claims 1 to 12, where the food packaging mateial is configured such that preferably the barrier paper is in direct contact with a food.

14. Use of a barrier paper according to any one of claims 1 to 12, in a food packaging material according to claim 13.

15. A process to produce a barrier paper, preferably a barrier paper according to any one of claims 1 to 12, the barrier paper comprising

a paper-based substrate layer, comprising, in this order,

a base paper layer,
a first base paper overcoat layer comprising a polymer,
a second base paper overcoat layer comprising a polymer,

an inorganic layer,
optionally, a protective layer comprising a polymer,

wherein the process includes the steps of, in the drying section of a paper or paperboard machine equipped with a drying device:

drying a dewatered paper base layer precursor, using the drying device, to form the paper base layer; or
drying a dewatered base paper layer precursor coated with a coating composition for the first base paper overcoat layer comprising a polymer, using the drying device, to form the base paper layer and the first base paper overcoat layer comprising a polymer,

wherein the drying device is configured to prevent drying shrinkage, and wherein preferably the drying device configured to prevent drying shrinkage is a Yankee dryer.

Europäisches
Patentamt

European
Patent Office

Office européen
des brevets

**EUROPEAN SEARCH REPORT**

Application Number

EP 23 16 0807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LINDNER MARTINA ET AL: "Hygroexpansion, Surface Roughness and Porosity Affect the Electrical Resistance of EVOH-Aluminum-Coated Paper", COATINGS, vol. 9, no. 5, 30 April 2019 (2019-04-30), page 295, XP055960620, DOI: 10.3390/coatings9050295 * figures 1, 2, 4 * * paragraph [02.1] – paragraph [02.6] * * page 11 * | 1-3,5,6, 10,12 | INV. D21H19/02 D21F5/00 D21H19/40 D21H19/44 D21H19/82 D21H19/84 D21H25/04 D21H27/10 |
| X | WO 2023/285496 A1 (NESTLE SA [CH]) 19 January 2023 (2023-01-19) * claims 1-12; figures 1, 2 * * page 11, line 17 – page 12, line 18 * * page 7, line 1 – line 4 * * page 12, line 26 – page 13, line 5 * | 1,4,7-9, 11,13-15 | |
| A | JP H09 1720 A (SAPPORO BREWERIES; NEW OJI PAPER CO LTD) 7 January 1997 (1997-01-07) * paragraph [0007] – paragraph [0008] * | 1-15 | TECHNICAL FIELDS SEARCHED (IPC) |
| A | PULKOWSKI J H: "OPERATING RESULTS WITH THE BEL-CHAMP SINGLE-TIER DRYER", TAPPI PROCEEDINGS PULPING CONFERENCE, XX, XX, 1 January 1990 (1990-01-01), pages 393-398, XP000577799, * page 1 – page 2 * | 1-15 | D21H D21J D21F |

-/--

The present search report has been drawn up for all claims

| Place of search | Date of completion of the search | Examiner |
|---|---|---|
| Munich | 17 July 2023 | Billet, Aina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 16 0807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE COMPENDEX [Online] ENGINEERING INFORMATION, INC., NEW YORK, NY, US; 2015, ERKKILA A -L: "Hygroexpansivity of anisotropic sheets", XP002809763, Database accession no. E20160101746094 * abstract * & ERKKILA A -L: "Hygroexpansivity of anisotropic sheets", NORDIC PULP AND PAPER RESEARCH JOURNAL 2015 SPCI SWE, vol. 30, no. 2, 2015, pages 326-335, DOI: 10.3183/NPPRJ-2015-30-02-P326-335 ----- | 1-15 | |
| A | MANNINEN ET AL: "The effect of microfibrillated cellulose addition on drying shrinkage and dimensional stability of wood-free paper", NORDIC PULP & PAPER RESEARCH JOURNAL, vol. 26, no. 03, 1 September 2011 (2011-09-01), pages 297-305, XP055258678, SE ISSN: 0283-2631, DOI: 10.3183/NPPRJ-2011-26-03-p297-305 * page 304 - page 305 * ----- | 1-15 | TECHNICAL FIELDS SEARCHED (IPC) |
| A | JP S57 154494 A (HONSHU PAPER CO LTD) 24 September 1982 (1982-09-24) * the whole document * ----- | 1-15 | |

The present search report has been drawn up for all claims

| Place of search | Date of completion of the search | Examiner |
|---|---|---|
| Munich | 17 July 2023 | Billet, Aina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 0807

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2023

| Patent document cited in search report | | Publication date | Patent family member(s) | | Publication date |
|---|---|---|---|---|---|
| WO 2023285496 | A1 | 19-01-2023 | NONE | | |
| JP H091720 | A | 07-01-1997 | JP 2789518 B2 | | 20-08-1998 |
| | | | JP H091720 A | | 07-01-1997 |
| JP S57154494 | A | 24-09-1982 | JP S6025792 B2 | | 20-06-1985 |
| | | | JP S57154494 A | | 24-09-1982 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022107007 A1

- WO 2021260043 A1